(19) Europäisches Patentamt
European Patent Office
Office européen des brevets

(11) **EP 4 273 102 A2**

(12) **EUROPEAN PATENT APPLICATION**

(43) Date of publication:
**08.11.2023 Bulletin 2023/45**

(21) Application number: **23170684.7**

(22) Date of filing: **28.04.2023**

(51) International Patent Classification (IPC):
*C01G 53/00* (2006.01)

(52) Cooperative Patent Classification (CPC):
**C01G 53/50;** C01P 2002/52; C01P 2002/54;
C01P 2002/72; C01P 2002/78; C01P 2004/51;
C01P 2004/61; C01P 2006/11; C01P 2006/12;
C01P 2006/40; C01P 2006/80; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210476057**

(71) Applicant: **Guizhou Zhenhua E-CHEM Inc.
Guiyang City, Guizhou 550014 (CN)**

(72) Inventors:
• **ZHOU, Chaoyi
Guiyang City, 550014 (CN)**
• **XIANG, Qianxin
Guiyang City, 550014 (CN)**

(74) Representative: **Dehns
St. Bride's House
10 Salisbury Square
London EC4Y 8JD (GB)**

(54) **CATHODE MATERIAL FOR SODIUM ION BATTERY AND PREPARATION METHOD AND APPLICATION THEREOF**

(57) The present invention discloses a cathode material for a sodium ion battery and a preparation method and application thereof. The cathode material has a general chemical formula of $Na_{1+a}Ni_{1-x-y-z}Mn_xFe_yA_zO_2$. where $-0.40 \leq a \leq 0.25$, $0.08 < x < 0.5$, $0.05 < y < 0.5$, $0.0 < z < 0.26$. A is selected from one of or a combination of two or more of Ti, Zn, Co, Al, Zr, Y, Ca, Li, Rb, Cs, W, Ce, Mo, Ba, Mg, Ta, Nb, V, Sc, Sr, B and Cu. Here, in the cathode material for the sodium ion battery, at least two diffraction peaks exist when a diffraction angle $2\theta$ is $42°$-$46°$. The diffraction angle $2\theta$ values of the two diffraction peaks are respectively around $43°$ and around $45°$. The present invention increases the discharge capacity of the sodium ion battery by controlling the structure of the cathode material of the sodium ion battery to reduce the residual alkali content of the cathode material.

Fig. 1

**Description**

**Technical Field**

The present invention relates to the field of sodium ion batteries and, in particular, to a cathode material for the sodium ion battery and a preparation method and application thereof.

**Background Art**

Concerns about global lithium resources and the need for new scale energy storage applications have led to the continuous development of new battery areas. With the rich study experience of lithium ion batteries, sodium ion batteries have been rapidly developed. Among them, the cathode materials for sodium ion batteries mainly include layered and tunnel-type transition metal oxides, polyanion compounds, prussian blue analogues, organic materials and so on. In addition to these systems, the sodium ion batteries are also developing in the direction of low cost and practicality. The full battery performance of $NaNi_{0.5}Mn_{0.5}O_2$ was first reported by Komaba et al in Japan in 2011. In the same year, FARAD ION, the world's first sodium ion battery company, was established. In 2013, Goodenough etc. proposed Prussian white cathode material with high voltage and excellent rate performance. In 2014, Hu Yongsheng from China first discovered the electrochemical activity of $Cu^{3+}/Cu^{2+}$ redox couple in layered oxides, and designed and prepared a series of low-cost Cu-based cathode materials.

The positive electrode oxides of sodium ion batteries mainly include layered structure oxides and tunnel structure oxides. The tunnel structure oxides have a unique "S"-shaped channel in the crystal structure, have better rate performance and have higher stability to air and water. However, they have a lower charge-discharge specific capacity at the first cycle, resulting in a smaller specific capacity actually available. Layered oxides, with a periodic layered structure, a simple preparation method, and a high specific capacity and voltage, are the main cathode materials for sodium ion batteries. In the preparation process, considering the loss of sodium element, excessive sodium salt is often added in the material production process, resulting in sodium salt residue after the material is sintered, mainly in the form of sodium carbonate and sodium hydroxide, referred to as residual alkali. If the alkalinity of sodium ion battery cathode material is too high, it will cause the material to absorb water and damp easily during the processing, increase the viscosity during the slurry stirring process, and easily form jelly shapes, resulting in poor processing performance. The layered oxides of sodium ions is generally a transition metal layer composed of an MO6 octahedral structure formed by a transition metal element and six surrounding oxygen. The sodium ions are located between the transition metal layers to form a layered structure in which MO6 polyhedral layers and NaO6 alkali metal layers are alternately arranged. These structures can cause lattice distortion and phase transformation during the charge and discharge of sodium ions battery, which hinders the transport and diffusion of sodium ions. Therefore, most of the sodium ions are free on the surface of the material and react with the electrolyte to form irreversible capacity loss. Meanwhile, it deteriorates the cycle performance, resulting in battery performance degradation or even failure, thus leading to safety hazards.

**Summary of the Invention**

The technical problem to be solved by the present invention is that the high amount of residual alkali exists in a cathode material for a sodium ion battery in the prior art. The presence of such residual alkali on the surface would result in the material being highly susceptible to moisture absorption deterioration, poor compatibility with the binder, resulting in a decrease in dispersion and stability of the slurry, which is not conducive to the subsequent coating process.

Since the layered structure oxide is generally a transition metal layer composed of an MO6 octahedral structure formed by a transition metal element and six surrounding oxygen, the sodium ions are located between the transition metal layers to form a layered structure in which MO6 polyhedral layers and NaO6 alkali metal layers are alternately arranged. These structures can cause lattice distortion and phase transformation during the battery charge and discharge of sodium ions, which hinders the transport and diffusion of sodium ions. Therefore, most of the sodium ions are free on the surface of the material and react with the electrolyte to form irreversible capacity loss. Meanwhile, it deteriorates the cycle performance, resulting in battery performance degradation or even failure, thus leading to safety hazards. In most of the prior art, doping a very small amount of a variable valence metal is adopted to achieve the purpose of improving the structural stability of a material, and the actual effect is not ideal. Through extensive research and development, the inventor has found that increasing the amount of doping elements or synergistic doping with multiple elements has a significant effect on stabilizing the crystal structure of the material, reducing the residual alkali on the surface of the cathode material, reducing the lattice distortion during the charging and discharging process of the sodium ion battery, and inhibiting the phase transition.

In view of the above technical problems, the invention aims to provide a cathode material for a sodium ion battery and a preparation method thereof. By using the preparation method, the residual alkali content on the surface of the sodium ion cathode material is reduced, so that the capacity and ratio of sodium ion battery are at a relatively high level.

Specifically, the invention provides the following technical solutions.

In a first aspect, the present invention provides a cathode material for a sodium ion battery, characterized in that the cathode material has a general chemical formula of $Na_{1+a}Ni_{1-x-y-z}Mn_xFe_yA_zO_{2+i}$, where $-0.40 \leq \alpha \leq 0.25$, $0.08 < x < 0.5$, $0.05 < y < 0.5$, $0.0 < z < 0.26$, $-0.3 \leq i \leq 0.3$; A is selected from one of or a combination of two or more elements of Ti, Zn, Co, Al, Zr, Y, Ca, Li, Rb, Cs, W, Ce, Mo, Ba, Mg, Ta, Nb, V, Sc, Sr, B and Cu. Among them, in the cathode material for the sodium ion battery, there are two diffraction peaks between 42° and 46°. Preferably, the cathode material has a general chemical formula of $Na_{1+a}Ni_{1-x-y-z}Mn_xFe_yA_zO_2$, where $-0.40 \leq a \leq 0.20$, $0.08 < x < 0.48$, $0.05 < y < 0.5$, $0.01 < z < 0.26$. A is selected from one of or a combination of two or more of Ti, Zn, Co, Al, Zr, Y, Ca, Li, Rb, Cs, W, Ce, Mo, Ba, Mg, Ta, Nb, V, Sc, Sr, B and Cu. Among them, in the cathode material for the sodium ion battery, there are two diffraction peaks between 42° and 46°.

More preferably, the cathode material has a general chemical formula of $Na_{1+a}Ni_{1-x-y-z}Mn_xFe_yA_zO_2$, where $0.40 \leq a \leq 0.20$, $0.08 < x < 0.48$, $0.05 < y < 0.5$, $0.1 < z < 0.22$. A is selected from one of or a combination of two or more of Ti, Zn, Co, Al, Zr, Y, Ca, Li, Rb, Cs, W, Ce, Mo, Ba, Mg, Ta, Nb, V, Sc, Sr, B and Cu. Among them, in the cathode material for the sodium ion battery, there are two diffraction peaks between 42° and 46°.

Preferably, the cathode material has a general chemical formula of $Na_{1+a}Ni_{1-x-y-z}Mn_xFe_yA_zO_2$, where $-0.30 \leq a < 0.20$, $0.15 < x < 0.35$, $0.15 < y < 0.35$, $0.1 < z < 0.22$. A is selected from one of or a combination of two or more of Ti, Zn, Co, Al, Zr, Y, Ca, Li, Rb, Cs, W, Ce, Mo, Ba, Mg, Ta, Nb, V, Sc, Sr, B and Cu. Here, in the cathode material for the sodium ion battery, two diffraction peaks exist when the diffraction angle 2Θ is 42°-46°.

Preferably, the A element contains a Zn element and an M element, wherein the content of the Zn element is represented by b, and the total content of the Zn element and the M element is z; the cathode material has a general chemical formula of $Na_{1+a}Ni_{1-x-y-z}Mn_xFe_yZn_bM_{z-b}O_2$, $-0.40 \leq a \leq 0.25$, $0.08 < x < 0.5$, $0.05 < y < 0.5$, $0.0 < z < 0.26$, $0 < 0 \leq b \leq 0.10$; M is selected from one of or a combination of two or more of Ti, Co, Al, Zr, Y, Ca, Li, Rb, Cs, W, Ce, Mo, Ba, Mg, Ta, Nb, V, Sc, Sr, B and Cu, preferably, $-0.40 \leq a \leq 0.20$, $0.08 < x < 0.48$, $0.05 < y < 0.45$, $0.01 < z < 0.24$; and/or the A element contains a Ti element and an N element, wherein the content of the Ti element is represented by c, and the total content of the Ti element and the N element is z; the cathode material has a general chemical formula of $Na_{1+a}Ni_{1-x-y-z}Mn_xFe_yTi_cN_{z-c}O_2$, $-0.40 \leq a \leq 0.25$, $0.08 < x < 0.5$, $0.05 < y < 0.5$, $0.0 < z < 0.26$, $0 < c < 0.24$; N is selected from one of or a combination of two or more of Zn, Co, Al, Zr, Y, Ca, Li, Rb, Cs, W, Ce, Mo, Ba, Mg, Ta, Nb, V, Sc, Sr, B and Cu, preferably, $-0.40 \leq a \leq 0.20$, $0.08 < x < 0.48$, $0.05 < y < 0.45$, $0.01 < z < 0.24$. Preferably, the cathode material has a general chemical formula of $Na_{1+a}Ni_{1-x-y-z}Mn_xFe_yTi_cN_{z-c}O_2$, $-0.40 \leq a \leq 0.25$, $0.08 < x < 0.5$, $0.05 < y < 0.5$, $0.0 < z < 0.26$, $0 \leq c \leq 0.22$. N is selected from one of or a combination of two or more of Zn, Co, Al, Zr, Y, Ca, Li, Rb, Cs, W, Ce, Mo, Ba, Mg, Ta, Nb, V, Sc, Sr, B and Cu, preferably, $-0.40 \leq a \leq 0.20$, $0.08 < x < 0.48$, $0.05 < y < 0.45$, $0.01 < z < 0.24$; and/or the A element contains a Ti element, a Zn element and an X element, wherein the content of the Zn element is represented by b, the content of the Ti element is represented by c, and the total content of the Ti element, the Zn element and the X element is z; the cathode material has a general chemical formula of $Na_{1+a}Ni_{1-x-y-z}Mn_xFe_yZn_bTi_cX_{z-b-c}O_2$, $0 < b \leq 0.1$, $0 < c < 0.24$; and X is selected from one of or a combination of two or more of Co, Al, Zr, Y, Ca, Li, Rb, Cs, W, Ce, Mo, Ba, Mg, Ta, Nb, V, Sc, Sr, B and Cu, preferably, $-0.40 \leq a \leq 0.20$, $0.08 < x < 0.48$, $0.05 < y < 0.45$, $0.01 < z < 0.24$. Preferably, the cathode material has a general chemical formula of $Na_{1+a}Ni_{1-x-y-z}Mn_xFe_yZn_bTi_cN_{z-b-c}O_2$, $0 < b \leq 0.1$, $0 < c \leq 0.22$. X is selected from one of or a combination of two or more of Co, Al, Zr, Y, Ca, Li, Rb, Cs, W, Ce, Mo, Ba, Mg, Ta, Nb, V, Sc, Sr, B and Cu, preferably, $-0.40 \leq a \leq 0.20$, $0.08 < x < 0.48$, $0.05 < y < 0.45$, $0.01 < z < 0.24$. More preferably, the cathode material has a general chemical formula of $Na_{1+a}Ni_{1-x-y-z}Mn_xFe_yZn_bTi_cN_{z-b-c}O_2$ $-0.40 \leq a \leq 0.25$, $0.08 < x < 0.5$, $0.05 < y < 0.5$, $0.0 < z < 0.26$, $0 < b \leq 0.1$, $0 < c \leq 0.17$. X is selected from one of or a combination of two or more of Co, Al, Zr, Y, Ca, Li, Rb, Cs, W, Ce, Mo, Ba, Mg, Ta, Nb, V, Sc, Sr, B and Cu, preferably, $-0.40 \leq a \leq 0.20$, $0.08 < x < 0.48$, $0.05 < y < 0.45$, $0.01 < z < 0.24$. Further preferably, the cathode material comprises at least either one of Zn and Ti.

Preferably, the cathode material powder for the sodium ion battery has an X-ray diffraction graph showing an $\alpha$-$NaFeO_2$ layered structure.

Preferably, in the X-ray diffraction graph of the cathode material powder for the sodium ion battery, a full width at half maxima FWHM of two diffraction peaks having a diffraction angle 2Θ value of 42°-46° is 0.06°-0.3°; more preferably, the width at half maximum (FWHM) is 0.06°-0.25°; and/or

two diffraction peaks having the diffraction angle 2Θ value of 42°-46° have interplanar spacings of 1.5Å-3.0Å; preferably, the two diffraction peaks having the diffraction angle 2Θ value of 42°-46° have interplanar spacings of 1.8Å-2.8Å; and more preferably, the two diffraction peaks having the diffraction angle 2Θ value of 42°-46° have interplanar spacings of 1.8Å-2.3Å.

Preferably, in the X-ray diffraction graph of the cathode material powder for the sodium ion battery, the width at half maximum (FWHM) of the diffraction peak around the diffraction angle 2Θ of 43° is 0.08°-0.18°; and more preferably, the width at half maximum (FWHM) of the diffraction peak around the diffraction angle 2Θ of 43° is 0.15°-0.18°; and/or the width at half maximum (FWHM) of the diffraction peak around the diffraction angle 2Θ of 45° is 0.09°-0.22°; and/or

the width at half maximum (FWHM) of the diffraction peak around the diffraction angle 2Θ of 43° is 0.08°-0.14°; the width at half maximum (FWHM) of the diffraction peak around the diffraction angle 2Θ of 45° is 0.09°-0.20°; and/or the diffraction peaks having the diffraction angle 2Θ value of around 43° have interplanar spacings of 2.0Å-2.2Å; and/or

the diffraction peaks having the diffraction angle 2Θ value of around 45° have interplanar spacings of 2.0Å-2.1Å; and/or

the ratio of an intensity of the diffraction peak around the diffraction angle 2Θ of 43° to an intensity of the diffraction peak around the diffraction angle 2Θ of 45° is 0.1-12.0; preferably, the ratio of the intensity of the diffraction peak around the diffraction angle 2Θ of 43° to the intensity of the diffraction peak around the diffraction angle 2Θ of 45° is 0.1-10.0; more preferably, the ratio of the intensity of the diffraction peak around the diffraction angle 2Θ of 43° to the intensity of the diffraction peak around the diffraction angle 2Θ of 45° is 0.5-6.6; and further preferably, the ratio of the intensity of the diffraction peak around the diffraction angle 2Θ of 43° to the intensity of the diffraction peak around the diffraction angle 2Θ of 45° is 4-6.6.

Here, in the X-ray diffraction graph (XRD) of the cathode material powder for the sodium ion battery, three to five diffraction peaks exist when the diffraction angle 2Θ is 30°-40°.

Preferably, the full width at half maxima FWHM of the three to five diffraction peaks having a diffraction angle 2Θ value of 30°-40° is 0.05-0.35°; preferably, the width at half maximum (FWHM) is 0.08°-0.3°; and/or

the interplanar spacing of the three to five diffraction peaks having the diffraction angle 2Θ value of 30°-40° is 2.1Å-3Å; preferably, the interplanar spacing is 2.4Å-2.8Å; and/or three diffraction peaks exist when the diffraction angle 2Θ is 30°-40°, and the diffraction angle 2Θ values thereof are respectively around 33°, around 35° and around 36°; preferably, the diffraction angle 2Θ values thereof are around 33.3°, around 35.3° and around 36.6°, respectively; or four diffraction peaks exist when the diffraction angle 2Θ is 30°-40°, and the diffraction angle 2Θ values thereof are respectively around 33°, around 35°, around 36° and around 37°; preferably, the diffraction angle 2Θ values thereof are around 33.5°, around 35.1°, around 36.5°, and around 37.3°, respectively; or

four diffraction peaks exist when the diffraction angle 2Θ is 30°-40°, and the diffraction angle 2Θ values thereof are respectively around 32°, around 33°, around 34°, around 35° and around 37°; preferably, the diffraction angle 2Θ values thereof are around 31.7°, around 33.4°, around 34.5°, around 35.2° and around 36.6°, respectively.

More preferably, the diffraction peak has a peak width at half maximum (FWHM) of 0.1°-0.15° when the diffraction angle 2Θ is around 32°, with an interplanar spacing of 2.75Å-2.85Å; and/or the diffraction peak has a peak width at half maximum (FWHM) of 0.12°-0.17° when the diffraction angle 2Θ is around 33°, with an interplanar spacing of 2.6Å-2.7Å; and/or the diffraction peak has a peak width at half maximum (FWHM) of 0.35°-0.39° when the diffraction angle 2Θ is around 34°, with an interplanar spacing of 0.55Å-0.65Å; and/or the diffraction peak has a peak width at half maximum (FWHM) of 0.1°-0.27° when the diffraction angle 2Θ is around 35°, with an interplanar spacing of 2.5Å-2.6Å; and/or the diffraction peak has a peak width at half maximum (FWHM) of 0.08°-0.11° when the diffraction angle 2Θ is around 37°, with an interplanar spacing of 2.4Å-2.5Å.

Preferably, in the X-ray diffraction graph (XRD) of the cathode material powder for the sodium ion battery, one diffraction peak exists when the diffraction angle 2Θ is around 16° and one diffraction peak exists when the diffraction angle 2Θ is around 41°; more preferably, one diffraction peak exists when the diffraction angle 2Θ is around 16.5° and one diffraction peak exists when the diffraction angle 2Θ is around 41.5°;

more preferably, the diffraction peak has a peak width at half maximum (FWHM) of 0.11°-0.16° when the diffraction angle 2Θ is around 16°, with an interplanar spacing of 5.3Å-5.4Å; and/or the diffraction peak has a peak width at half maximum (FWHM) of 0.1°-0.23° when the diffraction angle 2Θ is around 41°, with an interplanar spacing of 2.1Å-2.2Å.

Preferably, the mass percentage content of Mn element in the cathode material for the sodium ion battery is 3%-28%; preferably, the mass percentage content of the Mn element is 4%-25%; more preferably, the mass percentage content of the Mn element is 9-25%; and still more preferably, the mass percentage content of the Mn element is 9-18%; and/or

the mass percentage content of the Fe element is 3%-28%; preferably, the mass percentage content of the Fe element is 4%-25%; more preferably, the mass percentage content of the Fe element is 9%-17%; further preferably, the mass percentage content of the Fe element is 10.5%-17%, or further preferably 9%-14%; and/or the mass percentage content of the Ni element is 3%-27%; preferably, the mass percentage content of the Ni element is 5%-25%, and more preferably, the mass percentage content of the Ni element is 12%- 25%; and further preferably, the mass percentage content of the Ni element is 14%-19%, or further preferably 20%-25%.

Preferably, the cathode material for the sodium ion battery has a total quantity content of the residual alkali (free sodium) < 3.5%, preferably < 0.7%-3.15%.

Preferably, the cathode material for the sodium ion battery has a specific surface area of 0.2-1.3 $m^2$/g, more preferably 0.3-1 $m^2$/g; and/or

the cathode material for the sodium ion battery has a particle size of 2-18 $\mu$m, preferably 2-12$\mu$m; and/or
the cathode material for the sodium ion battery has a tap density of 1.0-2.9g/$cm^3$; more preferably, the cathode material for the sodium ion battery has a tap density of 1.0-2.4 g/$cm^3$.

Preferably, the cathode material for the sodium ion battery has a specific surface area of 0.5-1.3 $m^2$/g; and/or the particle size D50 of the cathode material for the sodium ion battery is 2-6 $\mu$m; and/or, the cathode material for the sodium ion battery has a tap density of 1.5-2 g/$cm^3$.

In a second aspect, the present invention provides a preparation method of the cathode material for the sodium ion battery , characterized by comprising the steps of mixing the Na source, the Ni source, the Mn source, the Fe source and the A source in a certain proportion, sintering, cooling and pulverizing the mixture to obtain the cathode material for the sodium ion battery.

Preferably, the mixing adopts a solid phase mixing method or a liquid phase mixing method Preferably, the sintering is divided into two steps: in a first step, the material is pre-treated at a temperature of 450-650°C; and/or the pretreatment time is 3-10h; in a second step, the material is pretreated at a temperature of 850-950°C ; and/or the treatment time is 8-40h.

Preferably, the heating rate of the first step is 1-10°C /min; and/or the heating rate in the second step is 1-10°C/min.

Preferably, a disc for pulverization has a spacing of 0-2 mm and a rotational speed of 500-3000 r/min; preferably, the disc for pulverization has a spacing of 0-1.5 mm, and a rotational speed of 1000-2800 r/min.

Preferably, the sintered gas is selected from air, oxygen and a mixed gas thereof.

Preferably, the sodium source is selected from one or two or more of sodium hydroxide, sodium carbonate, sodium nitrate, sodium oxalate, sodium chloride, sodium fluoride and sodium acetate; and/or

Preferably, the A source is selected from oxides, or salts or organics thereofof one or two or more of Ti, Zn, Co, Al, Zr, Y, Ca, Li, Rb, Cs, W, Ce, Mo, Ba, Mg, Ta, Nb, V, Sc, Sr, B and Cu; preferably, the A source is selected from carbonates, oxalates, nitrates or oxides of one or two or more of Ti, Zn, Co, Al, Zr, Y, Ca, Li, Rb, Cs, W, Ce, Mo, Ba, Mg, Ta, Nb, V, Sc, Sr, B and Cu; Still more preferably, the A source is selected from one or two or more of zinc oxide, titanium dioxide, calcium oxide, copper oxide, alumina, yttrium trioxide, boron trioxide, barium oxide, niobium oxide, magnesium oxide, and zirconia.

A sodium ion cathode material is prepared by the above-mentioned preparation method of the cathode material for the sodium ion battery.

In a third aspect, the present invention provides a sodium ion battery positive electrode including the cathode material for the sodium ion battery as a positive electrode active substance.

In a fourth aspect, the invention provides a sodium ion battery including the positive electrode for a sodium ion battery, a negative electrode and an electrolyte containing a sodium salt.

Preferably, the sodium ion battery is applied as a power source in a photovoltaic system, an electrical power system, an energy storage system, a mobile storage a or a low-end electric vehicle.

Preferably, the sodium ion battery is applied in an energy storage device such as distributed energy storage, centralized energy storage or a low-end power battery.

In a fourth aspect, the present invention provides an electrical power, an energy storage system or a mobile storage device prepared by using the sodium ion battery.

The **invention has the following beneficial effects.**

A cathode material for a sodium ion battery provided by the present invention has a chemical formula of $Na_{1+a}Ni_{1-x-y-z}Mn_xFe_yA_zO_2$. A modifying element A is added to improve the structural stability of the material to form a special XRD structure, providing a stable channel for the transmission of sodium ions, enabling sufficient transmission and diffusion of sodium ions to the inside of the material, thereby reducing the content of sodium ions free on the surface of the material, namely, the amount of residual alkali, so that the material is not prone to moisture absorption and deterioration even in a relatively high humidity environment. No gelation occurs during the slurrying process of the battery, thereby improving the stability of the slurry. The cathode material for the sodium ion battery of the present invention is not easily reacted with water and carbon dioxide in the air due to low residual alkali content, and also reduces side reactions with an electrolyte after the sodium ion battery is prepared, thereby improving the stability of the battery.

The cathode material for the sodium ion battery of the present invention has the above-mentioned specific chemical formula and a special XRD structure, and does not cause the collapse and contraction of the crystal structure due to the frequent de-intercalation of sodium ions during the charge and discharge of sodium ions, so that the removed sodium ions can be returned to the crystal structure, thereby ensuring a high capacity of the sodium ion battery.

**Brief Description of the Drawings**

Fig. 1 is an XRD graph of a sodium ion cathode material according to Example 1.
Fig. 2 is a charge-discharge graph of the sodium ion cathode material according to Example 1.
Fig. 3 is a XRD graph of the sodium ion cathode material according to Example 2.
Fig. 4 is a charge-discharge graph of the sodium ion cathode material according to Example 2.
Fig. 5 is a XRD graph of the sodium ion cathode material according to Example 3.
Fig. 6 is a charge-discharge graph of the sodium ion cathode material according to Example 3.
Fig. 7 is a XRD graph of the sodium ion cathode material according to Example 4.
Fig. 8 is a charge-discharge graph of the sodium ion cathode material according to Example 4.
Fig. 9 is a XRD graph of the sodium ion cathode material according to Example 5.
Fig. 10 is a charge-discharge graph of the sodium ion cathode material according to Example 5.
Fig. 11 is a XRD graph of the sodium ion cathode material according to Example 6.
Fig. 12 is a charge-discharge graph of the sodium ion cathode material according to Example 6.
Fig. 13 is a XRD graph of the sodium ion cathode material according to Comparative Example 1.
Fig. 14 is a charge-discharge graph of the sodium ion cathode material according to Comparative Example 1.
Fig. 15 is a XRD graph of the sodium ion cathode material according to Comparative Example 2.
Fig. 16 is a charge-discharge graph of the sodium ion cathode material according to Comparative Example 2.

**Detailed Description of the Invention**

As described above, it is an object of the present invention to provide a cathode material for a sodium ion battery and a method and application thereof.

There is less research in the prior art on reducing the content of residual alkali (sodium carbonate) on the surface of cathode material of sodium ion battery by regulating the structure of cathode material of sodium ions. The cathode material of the sodium ion battery of the invention has a special layered structure. In the X-ray diffraction pattern, when the diffraction angle $2\Theta$ is around 16° (it is around the diffraction angle X° appearing in the present invention, meaning that the diffraction angle is X° ± 1°, such as 16° ± 1° if it is around 16°, i.e., 15°-17°), and there is a minor strong peak. Three to five diffraction peaks exist when the diffraction angle $2\Theta$ is 30°-40°. At least two diffraction peaks exist when the diffraction angle $2\Theta$ is 42°-46°. The diffraction angle $2\Theta$ of the two diffraction peaks are around 43° and around 45° respectively. A major strong peak exists when the diffraction angle $2\Theta$ is around 41.5°. On the one hand, these special diffraction peaks and width at half maximums (FWHM) make the structure of the material more stable, ensure the sufficient occupation of sodium ions inside the material, reduce the free sodium ions on the surface of the material, and make the residual alkali (free sodium) of the material at a relatively low level. The material can be produced under the condition of humidity < 40% during the battery pulping, and the slurry will not gel. On the other hand, these special diffraction peaks and width at half maximums (FWHM) make the material have special crystal plane spacing and transport channels, which provide adequate channels for the transport and diffusion of sodium ions into the material. The sodium ions can be easily de-intercalated during charge and discharge of the battery, so that the sodium ion battery has excellent capacity and rate performance.

The starting materials and equipment sources used in the following Examples are shown in Table 1. Unless otherwise indicated, the starting materials used in the present invention are generally commercially available and chemically pure reagents.

Table 1 Starting materials/equipment used in the Examples of the present invention

| Starting materials/equipment | Type/Grade | Supplier |
|---|---|---|
| Sodium carbonate | / | Guizhou Golden Molar Chemical Co. Ltd. |
| Manganese carbonate | / | Shandong Puler New Material Co. Ltd. |

(continued)

| Starting materials/equipment | Type/Grade | Supplier |
|---|---|---|
| Nickel carbonate | / | Baoding Fusai Cobalt NickelNew Material Co. Ltd. |
| Ferric oxide | / | Hengshengyuan New Material Technology Co. Ltd. |
| Zinc oxide | / | Guizhou Tianlihe Chemical Co. Ltd. |
| Titanium dioxide | R60 | Nanjing Tianxing New Material Co. Ltd. |
| Titanium dioxide | / | Hangzhou Hemeng Chemical Co. Ltd. |
| Boron trioxide | 500-mesh | Guizhou Tianlihe Chemical Co. Ltd. |
| Laser particle size analyzer | MSU Model 2000 | Malvern Instruments Co. Ltd. (UK) |
| Automatic specific surface and porosity analyzer | TriStar II 3020 | Mac Instruments Inc. (US) |
| Powder ray diffractometer | X' Pert PRO MPD | Panaco (Netherlands) |
| Xinwei Battery Test System | CT-4008-5 V50 mA-164 | Xinwei Co. Ltd. |
| High-efficiency vacuum drying box | KP-BAK-03E-02 | Dongguan Kerui Electromechanical Equipment Co. Ltd. |
| Ultramicro stone disk mill | - | Suzhou Xiran Industrial Equipment Co. Ltd. |
| Roller kiln | 36 meters | Huayou New Energy Kiln Equipment Co. Ltd. |

Among them, the particle size of the sodium ion cathode material in the embodiments of the present invention is measured according to the method for determining the specific surface area of solid materials from the PRC national standard GB/T19587-2006 gas adsorption BET method. Analytical Instrument: Tristar II 3020 Automatic Specific Surface and Porosity Analyzer. Test parameters: adsorbate N2, 99.999%, coolant liquid nitrogen, P0 actual measurement, volume measurement mode, adsorption pressure deviation 0.05 mmHg, equilibrium time 5s, relative pressure point selection P/P0: 0.05; 0.1; 0.15; 0.2; 0.25; 0.30, sample pretreatment. The empty sample tube + stopper mass was weighed to record as M1. The sample was weighed 3.8g-4.2g, add to 3/8 inch 9.5 mm specific surface tube with a bulb. A FlowPrep 060 degassing station was set to 200°C, purge with inert gas, heat and degas for 0.5h. The mixture was removed to record the sample tube + stopper + sample mass as M2. The sample mass M = M2-M1. It was tested on the machine to record the BET value.

Here, the tap density (TD) of the sodium ion cathode material in the embodiments of the present invention was measured according to the metal powders tap density determination method from the PRC national standard GB/T 5162-2006 particle size distribution laser diffraction method. Test instrument: ZS-202 Tap-density meter. Test Parameters for TD: the number of vibrations of 3000; the vibration frequency of $250 \pm 10$ times/min; the amplitude of $3 \pm 0.1$ mm; the sample weighing accuracy of $50 \pm 0.5$g; and the vibration compact measuring cylinder 100 mL accuracy of 1 mL. According to the reading mode, the maximum and minimum volumes were read and the arithmetic mean value was calculated, and the calculation formula is $\rho = m/V$, with 2 decimal places rounded for the result.

Here, the particle size of the sodium ion cathode material in the embodiments of the present invention was measured according to the PRC national standard GB/T19077-2016 particle size distribution laser diffraction method. Test instrument: Malvern, master Size 2000 Laser Particle Size Analyzer. Test steps: 1 g powder was weighed and added into 60 ml pure water. After external ultrasound for 5 min, the sample was poured into a sampler for conducting the test and recording the test data. Test conditions: the test principle was Mie theory (light scattering) theory, with a detection angle of 0-135°, an external ultrasonic intensity of 40 KHz, 180w, a particle refractive index of 1.692, a particle absorption rate of 1, a sample test time of 6s, a background test snap number of 6,000 times, and a shading degree of 8-12%.

Here, according to the test method for residual alkali in the sodium ion cathode material in the embodiments of the present invention, $30g \pm 0.01g$ sample was accurately weighed and put into a 250 mL conical flask, with magneton and 100 mL deionized water added. The mixture was put on a magnetic stirrer which was started for stiring for 30 minutes. The mixed solution was filtered with a qualitative filter paper and a funnel. 1 mL of filtrate was transfered into a 100 mL beaker, with a magneton added. The beaker was placed on a magnetic stirrer, with 2 drops of phenolphthalein indicator added. It was titrated with 0.05 mol/L hydrochloric acid standard volumetric solution ($V_{initial}$ = 0) until the color of solution changes from red to colorless, with the volume V1 of 0.05 mol/L hydrochloric acid standard volumetric solution (Terminal 1, $V_1 = V_{Terminal\ 1} - V_{initial\ 1}$) recorded. 2 drops of methyl red indicator were added, the color of solution changing from colorless to yellow. It was titrated with 0.05mol/L hydrochloric acid standard titration solution until the color of solution changes from yellow to orange. The beaker was placed on a heating furnace and heated until the solution boils (the color of the solution was changed from orange to yellow). The beaker was removed and cooled to room temperature. The beaker was placed on a magnetic stirrer and titrated with 0.05 mol/L hydrochloric acid standard volumetric solution until the color of solution was changed from yellow to light red. The volume $V_2$ of 0.05 mol/L hydrochloric acid standard volumetric solution was recorded (Terminal 2, $V_2 = V_{Terminal\ 2} - V_{Terminal\ 1}$).

The calculation formula of free sodium content is as follows.

$$Na^+(\text{wt}\%) = \frac{c(V_1 + V_2) \times 10^{-3} \times M \times 100}{m} \times 100\%$$

$$Na_2CO_3(wt\%) = \frac{c \times V_2 \times 10^{-3} \times M_1 \times 100}{m} \times 100\%$$

$$NaOH(wt\%) = \frac{c \times (V_1 - V_2) \times 10^{-3} \times M_2 \times 100}{m} \times 100\%$$

$M$ is the relative atomic mass of sodium. $M_1$ is the relative molecular mass of sodium carbonate. $M_2$ is the relative molecular mass of sodium hydroxide. $m$ is the mass of the sample per gram. $V_1$ is a first titration terminal/mL. $V_2$ is a second titration terminal/mL. c is the concentration of hydrochloric acid standard titration solution, mol/L. 100 in the molecule represents a dilution factor.

Herein, the XRD test of the sodium ion cathode material in the embodimentes of the present invention uses an X' Pert PRO MPD analyzer. Test conditions: light pipe-Cu target, wavelength 1.54060 Å, Be window; incident light path-soller slit 0.04rad, divergence slit 1/2°, shading plate 10 mm, anti-scattering slit 1°; diffraction light path-anti-scattering slit 8.0 mm, seller slit 0.04rad, large Ni light-filter; scanning range, 10°-90°; scanning step, 0.013°; dwell time, 30.6s; voltage, 40 kV; current, 40 mA. Powder sample preparation: the powder was put into the groove of a glass slide by a clean sampling spoon (for a large-particle sample, it was necessary to grind it into powder < 50 $\mu$m). One side (> 20 mm) of scraping blade was placed against the surface of glass slide, and the other end was slightly lifted (at an included angle < 10°). The surface of powder sample was scraped flatly by the edge of scraping blade, and scraped flatly again when the glass slide rotated by 90°. It was repeatedly scraped in two directions for several times until the surface of sample was free from texture. After removing the excess powder around the glass slide, the glass slide was placed into a powder ray diffraction analyzer. Sample analysis: the tested sample file was opened by using the analysis software High-Score Plus, including firstly determining the background, selecting a peak to confirm the peak, repeating the fitting, recording the Williamson-Hall plot to calculate the grain size, selecting a corresponding phase to perform the matching and unit cell refinement, and recording unit cell parameters. Test philosophy: the Bragg equation reflects the relationship between the direction of the diffraction lines and the crystal structure. The diffraction must satisfy the Bragg formula: 2dsinθ=nλ (d: interplanar spacing; Θ: bragg angle; λ: the wavelength of the X-rays; n: reflection order). When X-rays are irradiated on a sample, the scattered X-rays of the atoms in the crystal interfere, producing strong X-ray diffraction lines in a particular direction. When the X-rays are irradiated on the sample at different angles, diffraction occurs at different crystal planes. The detector will receive the number of diffracted photons reflected from the crystal plane, thereby obtaining a spectrum graph of angle versus intensity.

Here, in the embodiment of the invention, the element content in the sodium ion cathode material is tested by inductively coupled plasma technology (ICP). Test instrument: an ICP-OES iCAP 6300 inductively coupled plasma atomic emission spectrometry analyzer. Test conditions. The number of detector detection units is more than 290000. The Camera temperature of detector cooling system is < -35 °C. The temperature of optical system optical chamber is 38 $\pm$ 0.1°C. The optical system wavelength range is 166 nm-847 nm. The plasma observation mode has a way of vertical observation. The plasma observation height is 14 mm, with a RF power 1150W and a frequency 27.12 MHz. The injection system auxiliary gas flow is 0.5 L/min, the injection system atomization gas flow 0.6 L/min, and the pump speed 50 rpm. Microtest steps: 0.2000-0.2100g of sample was accurately weighed and put in a 50 mL quartz beaker, with 10 ml of 1 :

1 aqua regia added. The mixture was covered by a watch glass, completely dissolved in the heating furnace, and transfered to a 50 mL volumetric flask for shaking well at a constant volume. It was tested on the machine to record the data. According to the main quantity measurement, 1 ml of the well-shaken solution was transfered to a 100 mL volumetric flask, diluted to 100 mL, and shaken well. It was tested on the machine to record the data.

The sodium ion battery of the present invention is composed of an electrode, an electrolyte, a diaphragm , and an aluminum-plastic film. Specifically, the electrode includes a positive electrode and a negative electrode. The positive electrode is made of a material including a positive electrode current collector and a positive electrode active substance coated on the positive electrode current collector, and a binder, a conductive aid, etc. The positive electrode active substance is the cathode material of the present invention. The negative electrode is made of a material including a current collector and a negative electrode active substance coated on the current collector, and a binder, a conductive aid, etc. The diaphragm is a PP/PE thin film conventionally used in the art for separating a positive electrode and a negative electrode from each other. The aluminum-plastic film is an inclusion body for the positive electrode, the negative electrode, the diaphragm, and the electrolyte.

The binder in the present invention is mainly used for improving adhesion characteristics between positive electrode active material particles and between the positive electrode active material particles and the current collector. The binder of the present invention may be selected from conventional binders commercially available in the art. In particular, the binder may be selected from polyvinyl alcohol, carboxymethyl cellulose, hydroxypropyl cellulose, polyvinyl chloride, carboxylated polyvinyl chloride, polyvinyl fluoride, ethanediyloxy-contained polymers, polyvinyl pyrrolidone, polyurethane, polyvinylidene floride, polyvinylidene fluoride, polyethylene, polypropylene, styrene-butadiene rubber, acrylated styrene-butadiene rubber, epoxy, nylon, or combinations thereof.

The conductive aid of the present invention may be selected from conventional conductive aids commercially available in the art. In particular, the conductive aid may be selected from a carbon-based material (e.g., natural graphite, artificial graphite, carbon black, acetylene black, ketjen black, or carbon fiber), a metal-based material (e.g. metal powder or metal fibers including copper, nickel, aluminum, silver, etc.), a conductive polymer (e.g. a polyphenylene derivative), or a combination thereof.

In the following embodiments, a sodium button battery is made by the cathode material prepared according to the present invention in the following manner.

Positive electrode preparation: the cathode material according to the present invention, the binder polyvinylidene fluoride (PVDF) and the conductive carbon black (S. P) are thoroughly mixed in a weight ratio of 7 : 2 : 1 and stirred to form a uniform slurry which was coated on an aluminum foil current collector, dried and pressed to form an electrode piece. The pressed positive electrode piece was punched, weighed and baked. Then the battery was assembled in a vacuum glove box. The shell bottom of the button battery was firstly placed, and foamed nickel (2.5 mm) and a negative electrode metal sodium sheet were placed on the shell bottom (Manufacturer: Shenzhen Youyan Technology Co. Ltd.). 0.5g of electrolyte in an environment with a relative humidity of less than 1.5% was injected, the electrolyte being a mixed solvent of ethylene carbonate (EC), diethyl carbonate (DEC) and dimethyl carbonate (DMC) in a mass ratio of 1 : 1 : 1, and the electrolyte being 1 mol/L sodium hexafluorophosphate solution. The diaphragm and the positive electrode sheet were added, and then the shell cover of the button battery was covered for sealing, the button cell model being CR2430.

The unit of the width at half maximum of the diffraction peak in the present invention is the same as the unit of the diffraction angle 2$\Theta$. The invention is further described in details below by the specific examples and combined with the attached drawings.

**Example 1**

Sodium carbonate, manganese carbonate, nickel carbonate, ferric oxide, zinc oxide, calcium oxide and copper oxide were weighed for a corresponding amount in a molar ratio, Na : Mn : Ni : Fe : Zn : Ca : Cu = 0.82 : 0.32 : 0.26 : 0.29 : 0.08 : 0.03 : 0.02, according to the chemical formula, and then added in a proportion into a ultra-high speed multi-function mixer for rotating at speed of 4000 r/min and mixing for 30 min. The uniformly mixed material was heated to a temperature of 550°C at a heating rate of 3°C /min under an air atmosphere, with the temperature kept constant for 4 hours, then heated up to 950°C at the temperature rate of 5°C/min, with the temperature kept constant for 12 hours, and then cooled naturally. The mixture, with the disc spacing of 1.0 mm and the rotating speed of 1800 r/min, was pulverized and sieved to obtain a sodium ion battery cathode material $Na_{0.82}Ni_{0.26}Mn_{0.32}Zn_{0.08}Fe_{0.29}Ca_{0.03}Cu_{0.02}O_2$.

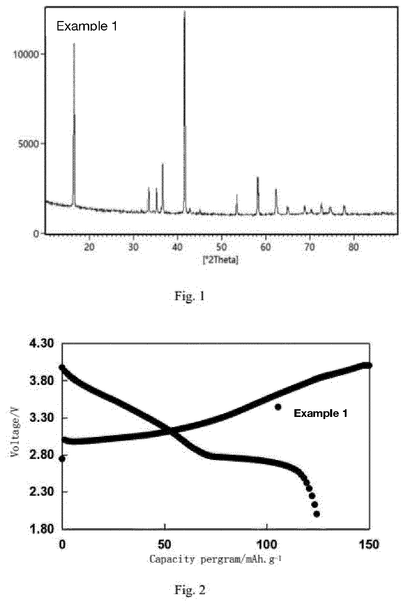

Fig. 1 shows the XRD graph of the cathode material of this example. It can be seen from the figure that a minor strong peak exists when the diffraction angle 2$\Theta$ is around 16.48° with a width at half maximum FWHM of 0.13° and an interplanar spacing of 5.374 Å. Five diffraction peaks exist when the diffraction angle 2$\Theta$ is 30°-40°, the full width at half maxima FWHM of the diffraction peak is 0.13° when 2$\Theta$ is 31.71°, and the interplanar spacing is 2.820 Å; the full width at half maxima FWHM of the diffraction peak is 0.163° when 2$\Theta$ is 33.39°, and the interplanar spacing is 2.681 Å; the full width at half maxima FWHM of the diffraction peak is 0.37° when 2$\Theta$ is 34.49°, and the interplanar spacing is 2.598Å;

the full width at half maxima FWHM of the diffraction peak is 0.13° when 2Θ is 35.20°, and the interplanar spacing is 2.548 Å; and the full width at half maxima FWHM of the diffraction peak is 0.114° when 2Θ is 36.54°, and the interplanar spacing is 2.457 Å. A strongest peak exists when the diffraction angle 2Θ is around 41.56°, with a width at half maximum FWHM of 0.104° and an interplanar spacing of 2.171 Å. Two diffraction peaks exist when the diffraction angle 2Θ is 42°-46°. The full width at half maxima FWHM of the diffraction peak is 0.18° when 2Θ is 42.72°, and the interplanar spacing is 2.115Å. The full width at half maxima FWHM of the diffraction peak is 0.13° when 2Θ is 45.01°, and the interplanar spacing is 2.013Å. The peak intensity of the diffraction peak when 2Θ is around 43° is 0.87 times the peak intensity of the diffraction peak when 2Θ is around 45°.

The cathode material has a residual alkali content of 2.32%, a specific surface area BET of 0.9 m$^2$/g, a particle size D50 of 8.5 μm, and a tap density TD of 1.65g/cm$^3$. Meanwhile, the cathode material of this example is prepared into a button battery for capacity test. Fig. 2 shows the charging and discharging curve of 0.1C/0.1C for the cathode material of this example (Example) under the condition of 4.0-2.0V.

## Example 2

Sodium carbonate, manganese carbonate, nickel oxide, ferrous oxalate, zinc oxide, titanium dioxide and yttrium trioxide were weighed for a corresponding amount in a molar ratio, Na : Mn : Ni : Fe : Zn : Ti : Y= 0.78 : 0.32 : 0.27 : 0.297 : 0.083 : 0.02 : 0.01, according to the chemical formula, and then added in a proportion into a ultra-high speed multi-function mixer for rotating at speed of 10000 r/min and mixing for 15 min. The uniformly mixed material was heated to a temperature of 500°C at a heating rate of 5°C /min under an air atmosphere, with the temperature kept constant for 3 hours, then heated up to 945°C at the temperature rate of 3°C /min, with the temperature kept constant for 16 hours, and then cooled naturally. The mixture, with the disc spacing of 1.5 mm and the rotating speed of 2000 r/min, was pulverized and sieved to obtain a sodium ion battery cathode material $Na_{0.78}Ni_{0.27}Mn_{0.32}Zn_{0.083}Fe_{0.297}Ti_{0.02}Y_{0.01}O_2$.

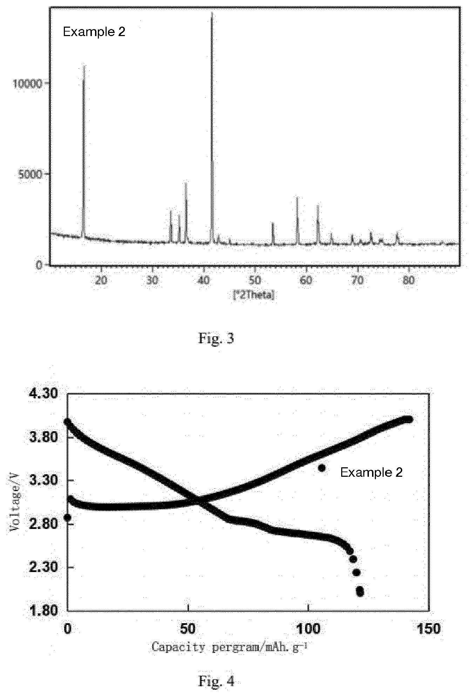

Fig. 3 shows the XRD graph of the cathode material of this example. It can be seen from the figure that a minor strong peak exists when the diffraction angle 2Θ is around 16.55° with a width at half maximum FWHM of 0.117° and an interplanar spacing of 5.352 Å. Four diffraction peaks exist when the diffraction angle 2Θ is 30°-40°, the full width at half maxima FWHM of the diffraction peak is 0.12° when 2Θ is 33.51°, and the interplanar spacing is 2.672Å; the full width at half maxima FWHM of the diffraction peak is 0.101° when 2Θ is 35.14°, and the interplanar spacing is 2.552 Å; the full width at half maxima FWHM of the diffraction peak is 0.102° when 2Θ is 36.50°, and the interplanar spacing is 2.460Å; and the full width at half maxima FWHM of the diffraction peak is 0.110° when 2Θ is 37.37°, and the interplanar spacing is 2.404 Å. A strongest peak exists when the diffraction angle 2Θ is around 41.55°, with a width at half maximum FWHM of 0.1° and an interplanar spacing of 2.172 Å. Two diffraction peaks exist when the diffraction angle 2Θ is 42°-46°. The full width at half maxima FWHM of the diffraction peak is 0.17° when 2Θ is 42.77°, and the interplanar spacing is 2.112 Å. The full width at half maxima FWHM of the diffraction peak is 0.09° when 2Θ is 45.03°, and the interplanar spacing is 2.012Å. The peak intensity of the diffraction peak when 2Θ is around 43° is 1.38 times the peak intensity of the diffraction peak when 2Θ is around 45°.

The cathode material has a residual alkali content of 2.08%, a specific surface area BET of 0.77m$^2$/g, a particle size D50 of 11.0 μm, and a tap density TD of 2.2g/cm$^3$. Meanwhile the cathode material of this example is prepared into a button battery for capacity test. Fig. 4 shows the charging and discharging curve of 0.1C/0.1C for the cathode material of this example under the condition of 4.0-2.0V.

## Example 3

Sodium carbonate, manganese oxide, nickel oxide, ferric oxide, zinc oxide and titanium dioxide were weighed for a corresponding amount in a molar ratio, Na : Mn : Ni : Fe : Zn : Ti = 0.81 : 0.32 : 0.24 : 0.286 : 0.098 : 0.056, according to the chemical formula, and then added in a proportion into a ultra-high speed multi-function mixer for rotating at speed of 14000 r/min and mixing for 25 min. The uniformly mixed material was heated to a temperature of 540 °C at a heating rate of 6°C /min under an air atmosphere, with the temperature kept constant for 7 hours, then heated up to 974°C at the temperature rate of 4°C /min, with the temperature kept constant for 10 hours, and then cooled naturally. The mixture, with the disc spacing of 0.6 mm and the rotating speed of 2000 r/min, was pulverized and sieved to obtain a cathode material having a molecular formula $Na_{0.8}iNi_{0.24}Mn_{0.32}Ti_{0.056}Zn_{0.098}Fe_{0.286}O$.

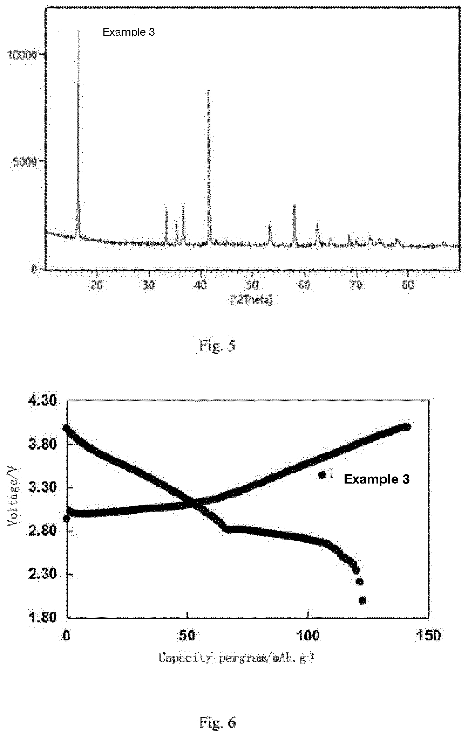

Fig. 5 shows the XRD graph of the cathode material of this example. It can be seen from the figure that a minor strong peak exists when the diffraction angle 2Θ is around 16.4° with a width at half maximum FWHM of 0.122° and an interplanar spacing of 5.378 Å. Three diffraction peaks exist when the diffraction angle 2Θ is 30°-40°, the full width at half maxima FWHM of the diffraction peak is 0.131° when 2Θ is 33.3°, and the interplanar spacing is 2.685 Å; the full width at half maxima FWHM of the diffraction peak is 0.258° when 2Θ is 35.3°, and the interplanar spacing is 2.541 Å; and the full width at half maxima FWHM of the diffraction peak is 0.233° when 2Θ is 36.6°, and the interplanar spacing is 2.452 Å. A strongest peak exists when the diffraction angle 2Θ is around 41.5°, with a width at half maximum FWHM of 0.222° and an interplanar spacing of 2.169 Å. Two diffraction peaks exist when the diffraction angle 2Θ is 42°-46°. The full width at half maxima FWHM of the diffraction peak is 0.088° when 2Θ is 42.9°, and the interplanar spacing is 2.103 Å. The full width at half maxima FWHM of the diffraction peak is 0.218° when 2Θ is 45.0°, and the interplanar spacing is 2.009 Å. The peak intensity of the diffraction peak when 2Θ is around 43° is 0.84 times the peak intensity of the diffraction peak when 2Θ is around 45°.

The cathode material has a residual alkali content of 2.98%, a specific surface area BET of 0.64m$^2$/g, a particle size D50 of 4.6 $\mu$m, and a tap density TD of 1.5g/cm$^3$. Meanwhile, the cathode material of this example is prepared into a button battery for capacity test. Fig. 6 shows the charging and discharging curve of 0.1C/0.1C for the cathode material of this example under the condition of 4.0-2.0V.

**Example 4**

Sodium nitrate, manganese trioxide, nickel oxalate, ferrous oxalate, titanium dioxide and aluminium trioxide were weighed for a corresponding amount in a molar ratio, Na : Mn : Ni : Fe : Ti : Al = 0.78 : 0.22 : 0.41 : 0.19 : 0.17 : 0.01, according to the chemical formula, and then added in a proportion into a ultra-high speed multi-function mixer for rotating at speed of 17000 r/min and mixing for 45 min. The uniformly mixed material was heated to a temperature of 580°C at a heating rate of 2°C /min under an air atmosphere, with the temperature kept constant for 6 hours, then heated up to 890°C at the temperature rate of 5°C /min, with the temperature kept constant for 18 hours, and then cooled naturally. The mixture, with the disc spacing of 0.8 mm and the rotating speed of 1800 r/min, was pulverized and sieved to obtain a cathode material having a molecular formula $Na_{0.78}Ni_{0.41}Fe_{0.19}Mn_{0.22}Ti_{0.17}Al_{0.01}O_2$.

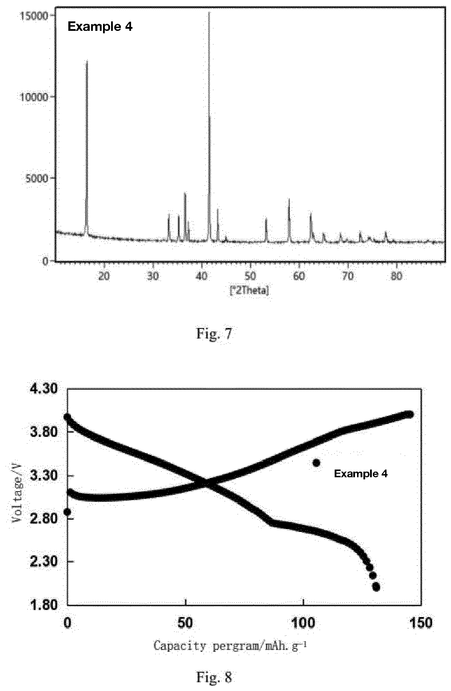

Fig. 7 shows the XRD graph of the cathode material of this example. It can be seen from the figure that a minor strong peak exists when the diffraction angle 2Θ is around 16.39° with a width at half maximum FWHM of 0.130° and an interplanar spacing of 5.403 Å. Four diffraction peaks exist when the diffraction angle 2Θ is 30°-40°, the full width at half maxima FWHM of the diffraction peak is 0.151° when 2Θ is 33.18°, and the interplanar spacing is 2.698Å; the full width at half maxima FWHM of the diffraction peak is 0.125° when 2Θ is 35.21°, and the interplanar spacing is 2.547 Å; the full width at half maxima FWHM of the diffraction peak is 0.125° when 2Θ is 36.53°, and the interplanar spacing is 2.458Å; and the full width at half maxima FWHM of the diffraction peak is 0.087° when 2Θ is 37.20°, and the interplanar spacing is 2.415 Å. A strongest peak exists when the diffraction angle 2Θ is around 41.48°, with a width at half maximum FWHM of 0.098° and an interplanar spacing of 2.175 Å. Two diffraction peaks exist when the diffraction angle 2Θ is 42°-46°. The full width at half maxima FWHM of the diffraction peak is 0.081° when 2Θ is 43.22°, and the interplanar spacing is 2.092 Å. The full width at half maxima FWHM of the diffraction peak is 0.09° when 2Θ is 44.91°, and the interplanar spacing is 2.017 Å. The peak intensity of the diffraction peak when 2Θ is around 43° is 6.56 times the peak intensity of the diffraction peak when 2Θ is around 45°.

The cathode material has a residual alkali content of 3.35%, a specific surface area BET of 0.55m$^2$/g, a particle size D50 of 5.5 $\mu$m, and a tap density TD of 1.85g/cm$^3$. Meanwhile, the cathode material of this example is prepared into a button battery for capacity test. Fig. 8 shows the charging and discharging curve of 0.1C/0.1C for the cathode material of this example under the condition of 4.0-2.0V.

**Example 5**

Sodium carbonate, manganese oxalate, nickel oxalate, ferrous oxalate, titanium oxide, boron trioxide were weighed for a corresponding amount in a molar ratio, Na : Mn : Ni : Fe : Ti : B = 0.88 : 0.204 : 0.454 : 0.2 : 0.137 : 0.005, according to the chemical formula, and then added in a proportion into a ultra-high speed multi-function mixer for rotating at speed of 20000 r/min and mixing well for 60 min. The uniformly mixed material was heated to a temperature of 600°C at a heating rate of 6°C /min under an air atmosphere, with the temperature kept constant for 3 hours, then heated up to 850°C at the temperature rate of 8°C/min, with the temperature kept constant for 36 hours, and then cooled naturally. The mixture, with the disc spacing of 0.4 mm and the rotating speed of 2200 r/min, was pulverized and sieved to obtain a cathode material having a molecular formula $Na_{0.88}Ni_{0.454}Mn_{0.204}Ti_{0.137}Fe_{0.2}B_{0.005}O_2$.

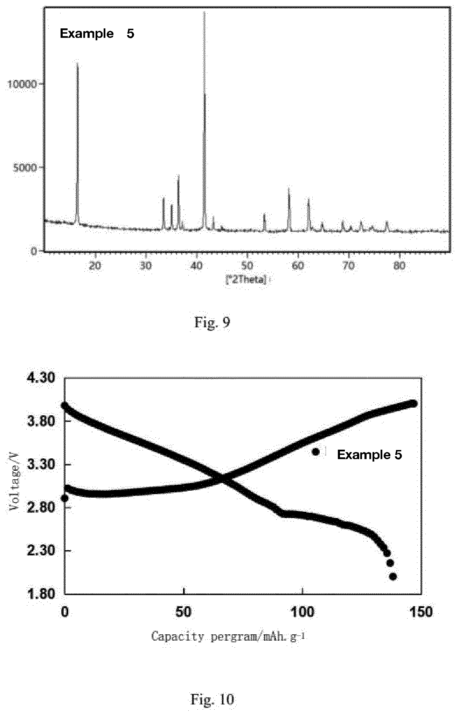

Fig. 9 shows the XRD graph of the cathode material of this example. It can be seen from the figure that a minor strong peak exists when the diffraction angle 2Θ is around 16.53° with a width at half maximum FWHM of 0.126° and an interplanar spacing of 5.359 Å. Four diffraction peaks exist when the diffraction angle 2Θ is 30°-40°, the full width at half maxima FWHM of the diffraction peak is 0.121° when 2Θ is 33.46°, and the interplanar spacing is 2.676Å; the full width at half maxima FWHM of the diffraction peak is 0.121° when 2Θ is 35.07°, and the interplanar spacing is 2.557 Å; the full width at half maxima FWHM of the diffraction peak is 0.127° when 2Θ is 36.42°, and the interplanar spacing is 2.465Å; and the full width at half maxima FWHM of the diffraction peak is 0.110° when 2Θ is 37.20°, and the interplanar spacing is 2.415 Å. A strongest peak exists when the diffraction angle 2Θ is around 41.46°, with a width at half maximum FWHM of 0.118° and an interplanar spacing of 2.176 Å. Two diffraction peaks exist when the diffraction angle 2Θ is 42°-46°. The full width at half maxima FWHM of the diffraction peak is 0.107° when 2Θ is 43.23°, and the interplanar spacing is 2.091 Å. The full width at half maxima FWHM of the diffraction peak is 0.14° when $2\Theta$ is 44.93°, and the interplanar spacing is 2.016 Å. The peak intensity of the diffraction peak when $2\Theta$ is around 43° is 4.14 times the peak intensity of the diffraction peak when $2\Theta$ is around 45°.

The cathode material has a residual alkali content of 3.47%, a specific surface area BET of 0.99 $m^2/g$, a particle size D50 of 3.6 $\mu m$, and a tap density TD of 1.6 $g/cm^3$. Meanwhile, the cathode material of this example is prepared into a button battery for capacity test. Fig. 10 shows the charging and discharging curve of 0.1C/0.1C for the cathode material of this example under the condition of 4.0-2.0V.

**Example 6**

Sodium carbonate, manganese oxalate, nickel oxalate, ferrous oxalate, titanium dioxide and zinc oxide were weighed for a corresponding amount in a molar ratio, Na : Mn : Ni : Fe : Ti : Zn = 0.8 : 0.21 : 0.38 : 0.2 : 0.14 : 0.07, according to the chemical formula, and then added in a proportion into a ultra-high speed multi-function mixer for rotating at speed of 25000 r/min and mixing well for 30 min. The uniformly mixed material was heated to a temperature of 520°C at a heating rate of 4°C /min under an air atmosphere, with the temperature kept constant for 5 hours, then heated up to 910°C at the temperature rate of 7 °C /min, with the temperature kept constant for 40 hours, and then cooled naturally. The mixture, with the disc spacing of 0.4 mm and the rotating speed of 2200 r/min, was pulverized and sieved to obtain a cathode material having a molecular formula $Na_{0.8}Ni_{0.38}Mn_{0.21}Ti_{0.14}Fe_{0.2}Zn_{0.07}O_{1.85}$.

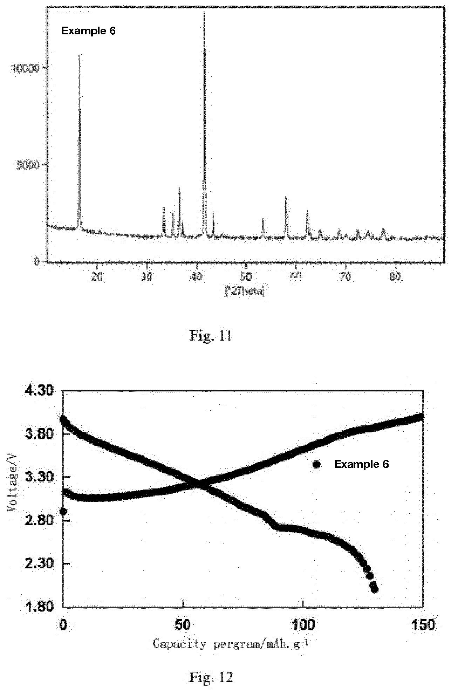

Fig. 11 shows the XRD graph of the cathode material of this example. It can be seen from the figure that a minor strong peak exists when the diffraction angle $2\Theta$ is around 16.48° with a width at half maximum FWHM of 0.157° and an interplanar spacing of 5.374 Å. Four diffraction peaks exist when the diffraction angle $2\Theta$ is 30°-40°, the full width at half maxima FWHM of the diffraction peak is 0.164° when $2\Theta$ is 33.37°, and the interplanar spacing is 2.683Å; the full width at half maxima FWHM of the diffraction peak is 0.175° when $2\Theta$ is 35.16°, and the interplanar spacing is 2.550 Å; the full width at half maxima FWHM of the diffraction peak is 0.158° when $2\Theta$ is 36.50°, and the interplanar spacing is 2.460Å; and the full width at half maxima FWHM of the diffraction peak is 0.110° when $2\Theta$ is 37.23° , and the interplanar spacing is 2.413 Å. A strongest peak exists when the diffraction angle $2\Theta$ is around 41.50°, with a width at half maximum FWHM of 0.139° and an interplanar spacing of 2.174 Å. Two diffraction peaks exist when the diffraction angle $2\Theta$ is 42°-46°. The full width at half maxima FWHM of the diffraction peak is 0.102° when $2\Theta$ is 43.25°, and the interplanar spacing is 2.09 Å. The full width at half maxima FWHM of the diffraction peak is 0.12° when $2\Theta$ is 44.96°, and the interplanar spacing is 2.015 Å. The peak intensity of the diffraction peak when $2\Theta$ is around 43° is 6.01 times the peak intensity of the diffraction peak when $2\Theta$ is around 45°.

The cathode material has a residual alkali content of 2.71%, a specific surface area BET of 0.90$m^2/g$, a particle size D50 of 3.5 $\mu m$, and a tap density TD of 1.72$g/cm^3$. Meanwhile, the cathode material of this example is prepared into a button battery for capacity test. Fig. 12 shows the charging and discharging curve of 0.1C/0.1C for the cathode material of this example under the condition of 4.0-2.0V.

**Comparative Example 1**

Sodium nitrate, manganese trioxide, nickel oxalate, ferrous oxalate, copper oxide and zinc oxide were weighed for a corresponding amount in a molar ratio, Na : Mn : Ni : Fe : Cu : Zn = 0.87 : 0.32 : 0.23 : 0.29 : 0.15 : 0.01, according to the chemical formula, and then added in a proportion into a ultra-high speed multi-function mixer for rotating at speed of 17000 r/min and mixing well for 45 min. The uniformly mixed material was heated to a temperature of 850°C at a heating rate of 5 °C /min under an air atmosphere, with the temperature kept constant for 20 hours, and then cooled naturally. The mixture, with the disc spacing of 0.9 mm and the rotating speed of 1800 r/min, was pulverized and sieved to obtain a cathode material having a molecular formula $Na_{0.87}Ni_{0.23}Mn_{0.29}Ti_{0.32}Fe_{0.15}Zn_{0.01}O_2$.

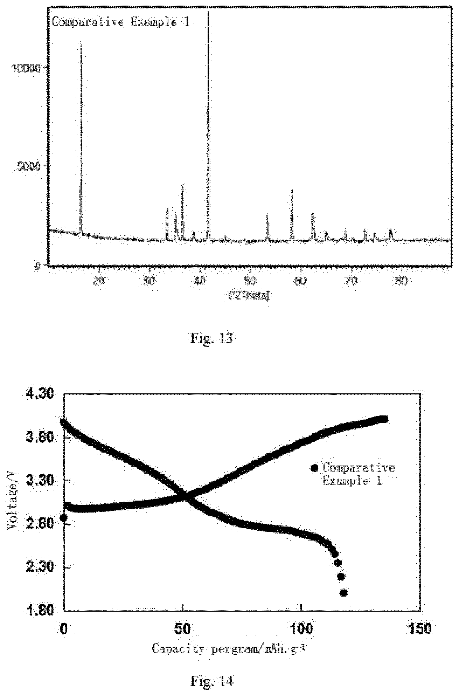

Fig. 13 shows the XRD graph of the cathode material of this example. It can be seen from the figure that a minor strong peak exists when the diffraction angle $2\Theta$ is around 16.52° with a width at half maximum FWHM of 0.120° and an interplanar spacing of 5.3613 Å. Four diffraction peaks exist when the diffraction angle $2\Theta$ is 30°-40°, the full width at half maxima FWHM of the diffraction peak is 0.149° when $2\Theta$ is 33.44°, and the interplanar spacing is 2.677Å; the full width at half maxima FWHM of the diffraction peak is 0.124° when $2\Theta$ is 35.22°, and the interplanar spacing is 2.546 Å; the full width at half maxima FWHM of the diffraction peak is 0.115° when $2\Theta$ is 36.56°, and the interplanar spacing is 2.455Å; and the full width at half maxima FWHM of the diffraction peak is 0.18° when $2\Theta$ is 38.67° , and the interplanar spacing is 2.326 Å. A strongest peak exists when the diffraction angle $2\Theta$ is around 41.58°, with a width at half maximum FWHM of 0.089° and an interplanar spacing of 2.169 Å. One diffraction peak exists when the diffraction angle $2\Theta$ is 42°-46°. The full width at half maxima FWHM of the diffraction peak is 0.07° when $2\Theta$ is 45.055°, and the interplanar spacing is 2.01 Å.

The cathode material has a residual alkali content of 4.19%, a specific surface area BET of 0.64 $m^2/g$, a particle size D50 of 7.1 $\mu m$, and a tap density TD of 1.98 $g/cm^3$. Meanwhile, the cathode material of this example is prepared into a button battery for capacity test. Fig. 14 shows the charging and discharging curve of 0.1C/0.1C for the cathode material of this example under the condition of 4.0-2.0V.

**Comparative Example 2**

Sodium carbonate, manganese carbonate, nickel carbonate, ferric oxide, titanium dioxide and boron trioxide were weighed for a corresponding amount in a molar ratio, Na : Mn : Ni : Fe : Ti : B = 0.86 : 0.15 : 0.33 : 0.28 : 0.23 : 0.01, according to the chemical formula, and then added in a proportion into a ultra-high speed multi-function mixer for rotating at speed of 25000 r/min and mixing well for 30 min. The uniformly mixed material was heated to a temperature of 520°C at a heating rate of 4°C /min under an air atmosphere, with the temperature kept constant for 5 hours, then heated up to 830°C at the temperature rate of 7°C/min, with the temperature kept constant for 6 hours, and then cooled naturally. The mixture, with the disc spacing of 0.9 mm and the rotating speed of 1800 r/min, was pulverized and sieved to obtain a cathode material having a molecular formula $Na_{0.86}Ni_{0.33}Mn_{0.15}Ti_{0.23}Fe_{0.28}B_{0.01}O_2$.

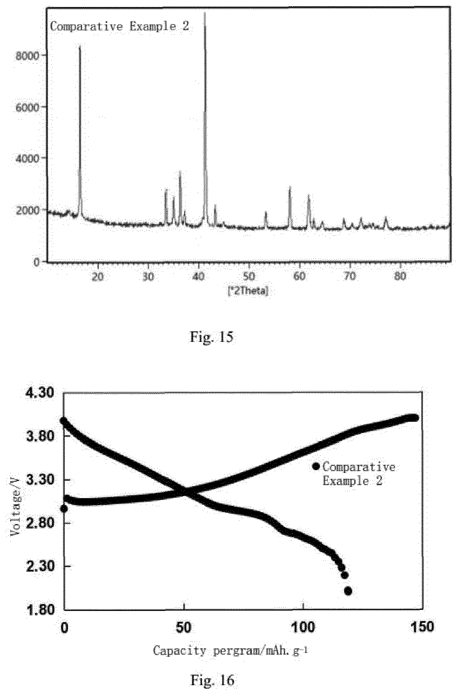

Fig. 15 shows the XRD graph of the cathode material of this example. It can be seen from the figure that a minor strong peak exists when the diffraction angle 2Θ is around 16.54° with a width at half maximum FWHM of 0.148° and an interplanar spacing of 5.353 Å. Five diffraction peaks exist when the diffraction angle 2Θ is 30°-40°, the full width at half maxima FWHM of the diffraction peak is 0.160° when 2Θ is 32.3°, and the interplanar spacing is 2.767 Å; the full width at half maxima FWHM of the diffraction peak is 0.156° when 2Θ is 33.47°, and the interplanar spacing is 2.674 Å; the full width at half maxima FWHM of the diffraction peak is 0.22° when 2Θ is 34.95°, and the interplanar spacing is 2.565Å; the full width at half maxima FWHM of the diffraction peak is 0.213° when 2Θ is 36.29° , and the interplanar spacing is 2.473 Å; and the full width at half maxima FWHM of the diffraction peak is 0.13° when 2Θ is 37.18° , and the interplanar spacing is 2.416 Å. A strongest peak exists when the diffraction angle 2Θ is around 41.36°, with a width at half maximum FWHM of 0.207° and an interplanar spacing of 2.183 Å. Two diffraction peaks exist when the diffraction angle 2Θ is 42°-46°. The full width at half maxima FWHM of the diffraction peak is 0.12° when 2Θ is 43.2°, and the interplanar spacing is 2.093 Å. The full width at half maxima FWHM of the diffraction peak is 0.40° when 2Θ is 44.81°, and the interplanar spacing is 2.021 Å. The peak intensity of the diffraction peak when 2Θ is around 43° is 6.91 times the peak intensity of the diffraction peak when 2Θ is around 45°.

The cathode material has a residual alkali content of 4.07%, a specific surface area BET of 0.45m²/g, a particle size D50 of 7.0 μm, and a tap density TD of 1.89g/cm³. Meanwhile, the cathode material of this example is prepared into a button battery for capacity test. Fig. 16 shows the charging and discharging curve of 0.1C/0.1C for the cathode material of this example under the condition of 4.0-2.0V.

Table 2 Properties of the cathode materials obtained in examples nd Comparative Examples

| | example 1 | example 2 | example 3 | example 4 | example 5 | example 6 | Comparative Example 1 | Comparative Example 2 |
|---|---|---|---|---|---|---|---|---|
| Diffractio n angle/° Width at half maximum/ ° Interplana r spacing/Å | 42.72; 0.180; 2.115 | 42.77; 0.170; 2.112 | 42.87; 2.108; 0.090 | 43.22; 2.092; 2.092 | 43.23; 0.107; 2.091 | 43.25; 0.102; 2.090 | / | 43.21; 0.100; 2.092 |
| Diffractio n angle/° Width at half maximum/ ° Interplana r spacing/Å | 45.01; 0.130; 2.013 | 45.03; 0.090; 2.012 | 45.01; 0.220; 2.012 | 44.91; 2.017; 0.090 | 44.93; 0.140; 2.061 | 44.96; 0.120; 2.051 | 45.06; 0.07; 2.010 | 44.90; 0.110; 2.017; |
| Particle size D50 (μm) | 8.5 | 11 | 4.3 | 5.5 | 3.6 | 3.5 | 7.1 | 7.0 |
| Specific surface area (m²/g) | 0.9 | 0.77 | 0.67 | 0.55 | 0.99 | 0.9 | 0.64 | 0.45 |

(continued)

| | example 1 | example 2 | example 3 | example 4 | example 5 | example 6 | Comparative Example 1 | Comparative Example 2 |
|---|---|---|---|---|---|---|---|---|
| Residual alkali content/% | 2.32 | 2.08 | 3.2 | 3.35 | 2.92 | 2.71 | 4.19 | 4.07 |
| TD (g/cm³) | 1.65 | 2.2 | 1.4 | 1.85 | 1.6 | 1.72 | 1.98 | 1.89 |
| Mn (%) | 17.68 | 17.33 | 17.51 | 12.09 | 11.21 | 11.57 | 17.55 | 8.33 |
| Ni (%) | 15.34 | 16.17 | 14.19 | 24.12 | 26.69 | 22.35 | 13.78 | 19.47 |
| Fe (%) | 16.24 | 16.64 | 15.91 | 10.88 | 11.26 | 11.14 | 16.35 | 15.69 |
| 4.0-2.0V 0.1 C Discharge capacity (mAh/g) | 125.4 | 121.5 | 120.9 | 132.6 | 138.5 | 129.5 | 117.0 | 118.7 |
| 4.0-2.0V 1.0 C Discharge capacity (mAh/g) | 115.5 | 114.6 | 113.4 | 118.7 | 121.3 | 116.8 | 94.3 | 96.2 |
| 4.0-2.0V 1.0 C/0.1 C rate | 92.1% | 94.3% | 93.79% | 89.5% | 87.58% | 90.19% | 80.59% | 81.04% |

It can be obtained from Table 2 that the cathode material for the sodium ion battery provided by the present invention has a chemical formula of $Na_{1+a}Ni_{1-x-y-z}Mn_xFe_yA_zO_2$. The structural stability of the material is improved by adding a modifying element Zn or Ti and other A elements. In addition to the XRD diffraction peak of the material with an 03 layered structure, two special diffraction peaks exist when the diffraction angle $2\Theta$ is 42°-46°. These special diffraction peaks provide stable channels for the transport of sodium ions, and allow the sufficient transport and diffusion of sodium ions to the inside of the material, thereby reducing the content of sodium ions free on the surface of the material. Thus, the residual alkali content is less than 3.5%. The material is not prone to moisture absorption and deterioration even in a relatively high humidity environment. No gelation occurs during the slurrying process of the battery, thereby improving the stability of the slurry.

The cathode material for the sodium ion battery of the present invention has the above-mentioned specific chemical formula and a special XRD structure. In the process of sodium ions charging and discharging, the frequent de-intercalation of sodium ions will not cause the contraction of the crystal structure, so that the removed sodium ions can be returned to the crystal structure. Meanwhile, due to the lower residual alkali amount, the side reactions with the electrolyte are also reduced after the sodium ion battery is prepared, thus ensuring that the sodium ion battery has a higher capacity and a better rate performance.

The applicant states that the description above is only a specific embodiment of the present invention, but the scope of protection of the present invention is not limited thereto. Those skilled in the art should understand that any changes and substitutions which can be easily made by those skilled in the art within the technical scope of the present invention disclosed are within the scope of protection and disclosure of the present invention.

**Claims**

1. A cathode material for a sodium ion battery, **characterized in that** the cathode material has a general chemical formula of $Na_{1+a}Ni_{1-x-y-z}Mn_xFe_yA_zO_{2+i}$, where $-0.40 \leq \alpha \leq 0.25$, $0.08 < x < 0.5$, $0.05 < y < 0.5$, $0.0 < z < 0.26$, $-0.3 \leq i \leq 0.3$; A is one or a combination of two or more selected from the group consisting of Ti, Zn, Co, Al, Zr, Y, Ca, Li, Rb, Cs, W, Ce, Mo, Ba, Mg, Ta, Nb, V, Sc, Sr, B, and Cu; wherein in the cathode material for the sodium ion battery, at least two diffraction peaks exists when a diffraction angle $2\Theta$ is 42°-46°, and the diffraction angle $2\Theta$ values of the two diffraction peaks are around 43° and around 45°, respectively.

2.  The cathode material for the sodium ion battery according to claim 1, **characterized in that** the cathode material has a chemical formula of $Na_{1+a}Ni_{1-x-y-z}Mn_xFe_yA_zO_2$, where $-0.40 \leq a \leq 0.20$, $0.08 < x < 0.48$, $0.05 < y < 0.45$, and $0.01 < z < 0.24$; A is one or a combination of two or more selected from the group consisting of Ti, Zn, Co, Al, Zr, Y, Ca, Li, Rb, Cs, W, Ce, Mo, Ba, Mg, Ta, Nb, V, Sc, Sr, B and Cu.

3.  The cathode material for the sodium ion battery according to claim 1, **characterized in that** the A element contains a Zn element and an M element, wherein the content of the Zn element is represented by b, and the total content of the Zn element and the M element is z; the cathode material has a general chemical formula of $Na_{1+a}Ni_{1-x-y-z}Mn_xFe_yZn_bM_{z-b}O_2$, $-0.40 \leq a \leq 0.25$, $0.08 < x < 0.5$, $0.05 < y < 0.5$, $0.0 < z < 0.26$, $0 < b < 0.10$; M is one or a combination of two or more elements selected from the group consisting of Ti, Co, Al, Zr, Y, Ca, Li, Rb, Cs, W, Ce, Mo, Ba, Mg, Ta, Nb, V, Sc, Sr, B and Cu, preferably, $-0.40 \leq a \leq 0.20$, $0.08 < x < 0.48$, $0.05 < y < 0.45$, $0.01 < z < 0.24$; and/or

    the A element contains a Ti element and an N element, wherein the content of the Ti element is represented by c, and the total content of the Ti element and the N element is z; the cathode material has a general chemical formula of $Na_{1+a}Ni_{1-x-y-z}Mn_xFe_yTi_cN_{z-c}O_2$, $-0.40 \leq a \leq 0.25$, $0.08 < x < 0.5$, $0.05 < y < 0.5$, $0.0 < z < 0.26$, $0 < c < 0.24$; N is one or a combination of two or more selected from the group consisting of Zn, Co, Al, Zr, Y, Ca, Li, Rb, Cs, W, Ce, Mo, Ba, Mg, Ta, Nb, V, Sc, Sr, B and Cu, preferably, $-0.40 \leq a \leq 0.20$, $0.08 < x < 0.48$, $0.05 < y < 0.45$, $0.01 < z < 0.24$; and/or
    the A element contains a Ti element, a Zn element and an X element, wherein the content of the Zn element is represented by b, the content of the Ti element is represented by c, and the total content of the Ti element, the Zn element and the X element is z; the cathode material has a general chemical formula of $Na_{1+a}Ni_{1-x-y-z}Mn_xFe_yZn_bTi_cX_{z-b-c}O_2$, $-0.40 \leq a \leq 0.25$, $0.08 < x < 0.5$, $0.05 < y < 0.5$, $0.0 < z < 0.26$, $0 < b \leq 0.1$, $0 < c < 0.24$; and X is one or a combination of two or more elements selected from the group consisting of two or more of Co, Al, Zr, Y, Ca, Li, Rb, Cs, W, Ce, Mo, Ba, Mg, Ta, Nb, V, Sc, Sr, B and Cu, preferably, $-0.40 \leq a \leq 0.20$, $0.08 < x < 0.48$, $0.05 < y < 0.45$, $0.01 < z < 0.24$;

4.  The cathode material for the sodium ion battery according to any one of claims 1-3, **characterized in that** the cathode material powder for the sodium ion battery has an X-ray diffraction graph showing an $\alpha$-NaFeO$_2$ layered structure.

5.  The cathode material for the sodium ion battery according to any one of claims 1-4, **characterized in that** in the X-ray diffraction graph of the cathode material powder for the sodium ion battery, a full width at half maxima FWHM of two diffraction peaks having a diffraction angle $2\Theta$ value of 42°-46° is 0.06°-0.3°; preferably, the full width at half maximum (FWHM) is 0.06°-0.25°; and/or
    two diffraction peaks having the diffraction angle $2\Theta$ value of 42°-46° have interplanar spacings of 1.5Å-3.0Å; preferably, the two diffraction peaks having the diffraction angle $2\Theta$ value of 42°-46° have interplanar spacings of 1.8Å-2.8Å; and more preferably, the two diffraction peaks having the diffraction angle $2\Theta$ value of 42°-46° have interplanar spacings of 1.8Å-2.3Å.

6.  The cathode material for the sodium ion battery according to any one of claims 1-5, **characterized in that** in the X-ray diffraction graph of the cathode material powder for the sodium ion battery, the full width at half maximum (FWHM) of the diffraction peak has one or more selected from the following features :

    (1) the full width at half maximum (FWHM) of the diffraction peak around the diffraction angle $2\Theta$ of 43° is 0.08°-0.18°, preferably, 0.08°-0.15°;
    (2) the full width at half maximum (FWHM) of the diffraction peak around the diffraction angle $2\Theta$ of 45° is 0.09°-0.22°, pereferably, 0.09°-0.20°;
    (3) the ratio of an intensity of the diffraction peak around the diffraction angle $2\Theta$ of 43° to an intensity of the diffraction peak around the diffraction angle $2\Theta$ of 45° is 0.1-12.0; preferably, the ratio of the intensity of the diffraction peak around the diffraction angle $2\Theta$ of 43° to the intensity of the diffraction peak around the diffraction angle $2\Theta$ of 45° is 0.1-10.0; more preferably, the ratio of the intensity of the diffraction peak around the diffraction angle $2\Theta$ of 43° to the intensity of the diffraction peak around the diffraction angle $2\Theta$ of 45° is 0.5-6.6; and further preferably, the ratio of the intensity of the diffraction peak around the diffraction angle $2\Theta$ of 43° to the intensity of the diffraction peak around the diffraction angle $2\Theta$ of 45° is 4-6.6.

7. The cathode material for the sodium ion battery according to any one of claims 1-6, **characterized in that**, in the X-ray diffraction graph of the cathode material powder for the sodium ion battery, three to five diffraction peaks exist when the diffraction angle 2Θ is 30°-40°; preferably, three diffraction peaks exist when the diffraction angle 2Θ is 30°-40°, and the diffraction angle 2Θ values thereof are respectively around 33°, around 35° and around 36°; more preferably, the diffraction angle 2Θ values thereof are around 33.3°, around 35.3° and around 36.6°, respectively; or

four diffraction peaks exist when the diffraction angle 2Θ is 30°-40°, and the diffraction angle 2Θ values thereof are respectively around 33°, around 35°, around 36° and around 37°; more preferably, the diffraction angle 2Θ values thereof are around 33.3°, around 35.3°, around 36.6°, and around 37.4°, respectively; or
five diffraction peaks exist when the diffraction angle 2Θ is 30°-40°,the diffraction angle 2Θ values thereof are around 32°, around 33°, around 34°, around 35°, and around 37°, respectively; preferably, the diffraction angle 2Θ values thereof are around 31.7°, around 33.4°, around 34.5°, around 35.2°, and around 36.6°, respectively.

8. The cathode material for the sodium ion battery according to any one of claims 1-7, **characterized in that** the mass percentage content of the Mn element in the cathode material for the sodium ion battery is 3%-28%; preferably, the mass percentage content of the Mn element is 4%-25%; more preferably, the mass percentage content of the Mn element is 4%-22%; and/or

the mass percentage content of the Fe element is 3%-28%; preferably, the mass percentage content of the Fe element is 4%-25%; and/or
the mass percentage content of the Ni element is 3%-27%; preferably, the mass percentage content of the Ni element is 5-25%, and more preferably, the mass percentage content of the Ni element is 7-24%.

9. The cathode material for the sodium ion battery according to any one of claims 1-8, **characterized in that** the cathode material for the sodium ion battery has a total content of the residual alkali: < 3.15%, preferably < 3.0%.

10. The cathode material for the sodium ion battery according to any one of claims 1-9, **characterized in that** the cathode material for the sodium ion battery has a specific surface area of 0.2-1.3 $m^2$/g; and /or

the cathode material for the sodium ion battery has a particle size of 2-18 $\mu$m, preferably 3-15$\mu$m; and /or
the cathode material for the sodium ion battery has a tap density of 1.0-2.9 $m^3$/g; preferably, the cathode material for the sodium ion battery has a tap density of 1.0-2.6 g/$cm^3$.

11. A preparation method of the cathode material for the sodium ion battery according to any one of claims 1-10, **characterized by** comprising the steps of mixing the Na source, the Ni source, the Mn source, the Fe source and the A source in a certain proportion, sintering, cooling and pulverizing the mixture to obtain the cathode material for the sodium ion battery; wherein, the mixing adopts a solid phase mixing method or a liquid phase mixing method; preferably, the sintering is divided into two steps: in a first step, the material is pretreated at a sintering temperature of 450-650 °C , and/or the sintering time is 3-10h; in a second step, the sintered material is sintered at a temperature of 850-950°C, and/or the sintering time is 8-40h; further preferably, the sintering at a constant temperature is performed by increasing the temperature at a rate of 1-10 °C /min up to the sintering temperature of the first step; and/or, the sintering at a constant temperature is performed by increasing the temperature at a rate of 1-10 °C /min up to the sintering temperature of the second step.

12. The preparation method of the cathode material for the sodium ion battery according to claim 11, **characterized in that** the sodium source is one or a combination of two or more elements selected from the group consisting of sodium hydroxide, sodium carbonate, sodium nitrate, sodium oxalate, sodium chloride, sodium fluoride and sodium acetate; and/or the A source is oxides or salts or organics thereof of one or a combination of two or more elements selected from the group consisting of Ti, Zn, Co, Al, Zr, Y, Ca, Li, Rb, Cs, W, Ce, Mo, Ba, Mg, Ta, Nb, V, Sc, Sr, B and Cu;

preferably, the A source is carbonates, oxalates, nitrates or oxides of one or a combination of two or more elements selected from the group consisting of Ti, Zn, Co, Al, Zr, Y, Ca, Li, Rb, Cs, W, Ce, Mo, Ba, Mg, Ta, Nb, V, Sc, Sr, B and Cu;
more preferably, the A source is selected from one or two or more of zinc oxide, titanium dioxide, calcium oxide, copper oxide, alumina, yttrium trioxide, boron trioxide, barium oxide, niobium oxide, magnesium oxide, and zirconia.

**13.** A sodium ion cathode material, **characterized by** being prepared by the preparation method of the cathode material for the sodium ion battery according to claim 11 or claim 12.

**14.** A positive electrode for a sodium ion battery, **characterized by** comprising at least one of the cathode materials according to any one of claims 1-10 or prepared by the preparation method of the cathode material for the sodium ion battery according to claim 13 as a positive electrode active substance.

**15.** A sodium ion battery, **characterized in that** the sodium ion battery comprises the positive electrode for a sodium ion battery according to claim 14, a negative electrode, and an electrolyte containing a sodium salt.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16